Europäisches Patentamt

European Patent Office

Office européen des brevets

(11) Publication number: 0 497 195 A1

# EUROPEAN PATENT APPLICATION

(21) Application number: 92100961.9

(22) Date of filing: 22.01.92

(51) Int. Cl.5: **G01F 1/06**, G01F 1/10, G01F 3/06, G01F 3/10, G01F 3/16, G01F 3/18, G01F 15/06

(30) Priority: 31.01.91 JP 10536/91

(43) Date of publication of application:
05.08.92 Bulletin 92/32

(84) Designated Contracting States:
DE FR GB

(71) Applicant: **Trinity Industrial Corporation**
4-1, Marunouchi 2-chome Chiyoda-ku
Tokyo(JP)

(72) Inventor: **Achiwa, Noriyuki, c/o Trinity**
**Industrial Corp.**
**9, Kakimoto-cho 1-chome**
**Toyota-shi, Aichi(JP)**
Inventor: **Yamaguchi, Masanobu, c/o Trinity**
**Industrial Corp.**

**9, Kakimoto-cho 1-chome**
**Toyota-shi, Aichi(JP)**
Inventor: **Watanabe, Touichi, c/o Trinity**
**Industrial Corp.**
**9-34, Yakou 5-chome, Tsurumi-ku**
**Yokohama-shi, Kanagawa(JP)**
Inventor: **Okuta, Takatoshi, c/o Trinity**
**Industrial Corp.**
**9, Kakimoto-cho 1-chome**
**Toyota-shi, Aichi(JP)**

(74) Representative: **Stachow, Ernst-Walther et al**
**Lippert, Stachow, Schmidt & Partner,**
**Patentanwälte, Frankenforster Strasse**
**135-137, P.O. Box 30 02 08**
**W-5060 Bergisch Gladbach 1(DE)**

(54) Volumetric flowmeter.

(57) A volumetric flowmeter comprising a casing that intervenes in a flow channel of a fluid, a movable portion that rotates or reciprocates in the casing to continuously deliver the fluid filled in the space of the casing, the movable portion being entirely or partially formed with a light permeable member for allowing a light to permeate from one to the other wall sides of the casing opposed on both sides of the movable portion, and a light transmission system and a light receiving system for transmitting and receiving the light through the light permeable member at a position at which the permeable member passes or arrives intermittently. Flow rate of a fluid either permeable or impermeable, can be detected in a contactless manner and also safely even in a high voltage zone.

*F I G. 1*

# BACKGROUND OF THE INVENTION

## Field of the Invention

The present invention concerns a volumetric flowmeter for detecting a flow rate of a fluid by continuously charging and then discharging a fluid into and out of a space in a casing.

## Description of the Prior Art

In an existent volumetric flowmeter, a movable portion disposed in a casing intervened in a flow channel of a fluid is rotated or reciprocated to continuously deliver a fluid filled in a space at the inside of the casing, to determine a flow rate by counting the number of delivery and it includes, depending on the structure of the movable portion, various types such as an oval gear type, Root's type, floating rotor type, rotary piston type or slide vane type.

Further, as the method of measuring the flow rate, there has been known, for example, a method of disposing a counting section to an end of a rotational shaft that rotatably supports a movable portion or to an end of a rotational crank shaft that converts the reciprocal movement of the movable portion into that of the rotational movement for measuring the number of rotation of such a shaft, or a method of attaching a magnetic member to the end of the shaft or the rotating movable portion and transmitting an electric pulse signal obtained from pick-up coils the magnetic flux density of which is changed by the rotation of the magnetic member to generate an induced electromotive voltage.

However, none of the above-mentioned flowmeters can be used safely in a high voltage zone. In a case if a flow rate of a paint is detected, for example, just near an electrostatic coating machine applied with a voltage as high as 80 to 120 KV, there is a risk that the high voltage applied to the coating machine leaks directly to the flowmeter, to destroy the electric system of the flowmeter.

Further, in a flowmeter intervened to a paint pipeline for supplying an electroconductive paint such as an aqueous paint or a metallic paint to an electrostatic coating machine, there is a worry that a high voltage applied to the electrostatic coating machine may possibly leak through the electroconductive paint in the paint pipeline even if the flowmeter is placed remote from the coating machine.

## OBJECT OF THE INVENTION

It is, accordingly, a main technical object of the present invention to provide a volumetric flowmeter that can be used safely even in a high voltage zone.

# SUMMARY OF THE INVENTION

The foregoing objects can be attained in accordance with the present invention by a volumetric flowmeter comprising a casing (4, 22, 31) intervening in a flow channel of a fluid, a movable portion (5, 25, 33) that rotates or reciprocates in the casing to continuously deliver the fluid filled in the space of the casing, the movable portion (5, 25, 33) being entirely or partially formed with a light permeable member (8, 26, 34) for allowing the light to permeate from one to the other side walls of the casing that oppose to each other on both sides of the movable portion, and a light transmission system (EO) and a light receiving system (OE) for transmitting and receiving a light through the light permeable member at a position (positions) at which the light permeable member passes or arrives intermittently.

According to the present invention, when the movable portion is rotated or reciprocated within the casing, the light permeable member entirely or partially constituting the movable portion passes or arrives intermittently at a speed in proportion with a flow rate of a fluid between the light transmission system and the light receiving system for transmitting and receiving the light through the light permeable member and transmission and reception of the light is always conducted at least upon passage or arrival of the light permeable member between the light transmission system and the light receiving system.

For instance, in a case when the movable portion is rotated or reciprocated by a light impermeable fluid such as a pigment paint, light is transmitted and received between the light transmission system and the light receiving system only upon arrival or passage of the light permeable member formed partially or entirely to the movable portion.

Further, in a case where the movable portion is rotated or reciprocated by a light-permeable fluid such as a clear paint or water, both terminals of the light transmission system and the light receiving system are opposed to each other at a position where the movable portion is always present therebetween, by which a light is transmitted and received between the light transmission system and the light receiving system only when the light permeable portion formed to a part of the movable portion passes or arrives.

Thus, the light is transmitted and received between the light transmission system and the light receiving system intermittently at a predetermined timing depending on the rotational or reciprocating speed of the movable portion, at a predetermined timing, to take out an optical pulse in proportion with the flow rate of the fluid from the light receiving system.

Accordingly, when the period or the frequency of the optical pulse train taken out from the light receiving system is measured by a rotational detector having an optical/electric conversion device or the like, the rotational speed or the reciprocating speed of the movable portion that rotates or reciprocates within the casing in accordance with the flow rate of the fluid can be taken out in a contactless manner from the outside.

Further, the light transmission system and the light receiving system may transmit and receive the light directly between the electric/optical conversion device and the optical/electric conversion device, but the light can also be transmitted and received between them by way of a transmission optical fiber and a receiving optical fiber. In this case, since there is no worry that a high voltage should leak to an electric system having the electric/optical conversion device or the optical/electric conversion device or the like even if the flowmeter is disposed, for example, in a high voltage zone. Accordingly, it is most suitable as a paint flowmeter that detects the flow rate of a paint supplied to an electrostatic coating machine and it can be used as it is as a detonation proof flowmeter that detects the flow rate of a combustible substance such as gasoline.

## DESCRIPTION OF THE ACCOMPANYING DRAWINGS

These and other objects, as well as advantageous features of the present invention will become apparent by reading detailed descriptions for preferred embodiments according to the present invention with reference to the accompanying drawings, wherein

Fig. 1 is a perspective view of a volumetric flow meter as a first embodiment according to the present invention;

Fig. 2 is a cross sectional fragmentary view of the flowmeter shown in Fig. 1;

Fig. 3 is a flow sheet illustrating the state of using the flowmeter;

Fig. 4 is a perspective view for a portion of a second embodiment according to the present invention;

Fig. 5 is a perspective view for a portion of a third embodiment according to the present invention;

Fig. 6 is a flow sheet illustrating the state of using the embodiment;

Fig. 7 is a plan view illustrating a fourth embodiment according to the present invention;

Fig. 8 is a plan view illustrating a fifth embodiment according to the present invention; and

Fig. 9 is a perspective view of a fifth embodiment shown in Fig. 8.

## DESCRIPTION OF THE PREFERRED EMBODIMENTS

Description will now be made more specifically to the preferred embodiments according to the present invention with reference to the drawings.

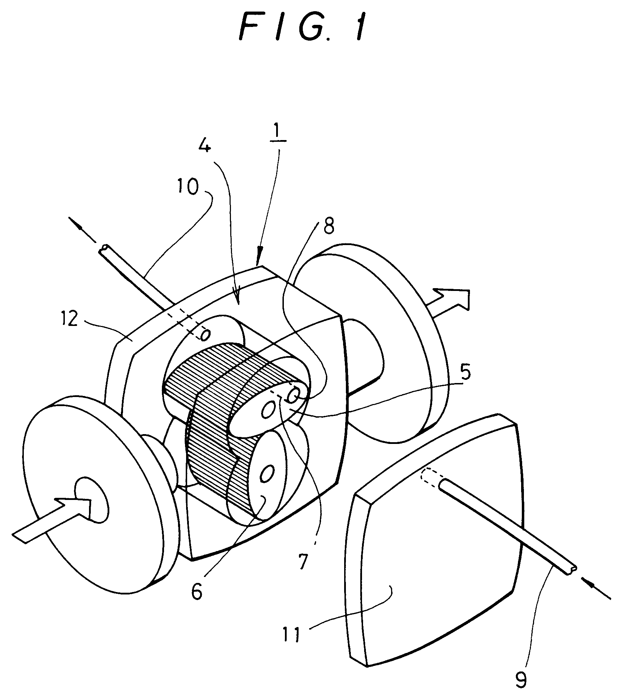

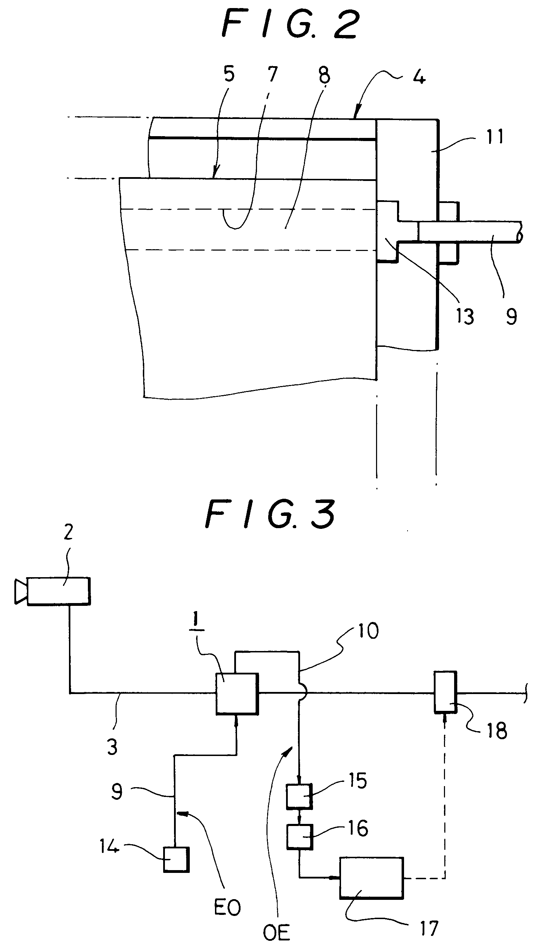

A flowmeter 1 shown in Fig.1 through Fig. 3 comprises a casing 4 that intervenes in a flow channel of a paint pipeline 3 for supplying a paint to an electrostatic coating machine 2 applied with a high voltage. A pair of upper and lower movable portions 5 and 6 which rotate at a speed corresponding to the flow rate of the paint are disposed within the casing 4.

Each of the movable portions 5 and 6 comprises an oval gear made of ceramic or metal material formed as a body having an elliptic cross sectional shape identical with each other. Each of them functions as a rotor which is rotated by a pressure of the paint flowing through the inside of the casing, usually in a state where the gears are kept engaged while being displaced by 90° from each other.

One of the movable portions i.e., the movable portion 5, has a perforation 7 passing from one to the other sides thereof at a position displaced from the center of rotation along the direction of the longer axis of the ellipse as viewed from the center of the rotation, and a glass rod, optical fiber or the like of a length corresponding to the thickness of the movable portion 5 is inserted and embedded in the perforation 7, to form light permeable body 8.

A terminal of a transmission optical fiber 9 of a light transmission system EO and a terminal for a receiving optical fiber 10 of a light receiving system OE for transmitting and receiving light are disposed on both of light and left side walls 11 and 12, respectively, of the casing 4 opposed on both sides of the movable portion 5 each at a position at which the light permeable body 8 passes intermittently along with the rotation of the movable portion 5, such that the terminals are opposed to each other with their optical axes being alignment by way of a space in the casing 4.

The terminals of the transmission optical fiber 9 and the receiving optical fiber 10 are secured, respectively, to the side walls 11 and 12 of the casing 4, and a portion of each of the side walls 11 an 12 for securing each of the terminals of the fibers 9 and 10 is formed with a transparent member 13 made, for example, of glass or reinforced plastic. When a condenser lens is used for the transparent member 13, optical axes of the respective fibers 9 and 10 can be aligned easily.

A light emitting portion 14 comprising electric/optical conversion device us connected to an extended end of the light transmission optical fiber 9 and a light receiving portion 15 comprising an optical/electric conversion device is conducted to an extended end the receiving optical fiber 10 respectively in the light transmission system EO and the light receiving section OE. The light receiving section 15 has, connected therewith, a signal processing section 16 for converting a periodical voltage signal into a pulse train and a flow rate control device 17 which determine the rotational speed of the movable portion 5 based on the electric pulse signal outputted from the signal processing section 16, determines the difference value between the rotational speed of the movable portion 5 and the rotational speed corresponding to a predetermined value for the flow rate of the paint and outputs a feedback control signal depending on the difference value, so that the feedback control signal outputted from the flow rate control device 17 conducts ON-OFF control to a flow rate control valve 18 disposed to a paint pipe line 3, thereby automatically control the flow rate of the paint supplied to the electrostatic coating machine 2.

When a paint flows through the pipe of the paint pipeline 3, the movable portions 5 and 6 in the casing 4 are rotated in synchronization at a rotational speed in accordance with the flow rate of the paint.

In this case, if the paint is an pigment paint, the light transmitted and received between the transmission optical fiber 9 of the light transmission system EO and the receiving optical fiber 10 of the light receiving system OE is interrupted by the pigment paint filled in the casing 4 and the movable portion 5 rotating in the casing 4. Only when the light permeable member 8 as a part of the movable portion 5 passes between the terminals of both of the optical fibers 9 and 10, an optical path between the terminals is established through the light permeable member 8.

In this way, the light is received and transmitted intermittently between the light transmission system EO and the light receiving system OE in accordance with the rotation of the movable portion 5, and the intermittent light is transmitted through the receiving optical fiber 10 of the light receiving system OE, put to opto/electronic conversion in the light receiving section 15 and then converted into periodical electric pulse signals in the signal processing section 16.

Then, the flow rate control device 17 determines the rotational speed of the movable portion 5 by measuring the period or the frequency of the pulse train outputted from the signal processing section 16, then determines the difference value between the thus determined rotational speed and the rotational speed corresponding to the predetermined value for the flow rate of the paint and outputs a feedback control signal accordance with the difference value to the flow rate control valve 18 disposed in the paint pipeline 3, so that the flow rate of the paint flowing through the pipe of the paint pipeline 3 is properly controlled by the control valve 18.

In this way, when the rotation of the movable portion 5 disposed in the casing 4 is optically sensed by the transmission optical fiber 9 and the receiving optical fiber 10, even if the flowmeter 1 is disposed just near the electrostatic coating machine 2 applied with the high voltage, there is no risk that the high voltage leaks to the signal processing section 16, the flow rate control device 17, etc. to them.

In a case of detecting the flow rate of an impermeable fluid such as a pigment paint, it may be alternatively constituted such that the movable portion 5 is molded, for example, from a transparent plastic material to make the whole movable portion 5 entirely as a light permeable member, so that when both ends of the movable portion 5 extending in the direction of the longer axis of the ellipse pass between the terminals of the transmission optical fiber 9 and the receiving optical fiber 10, the light may be allowed to transmit between the terminals.

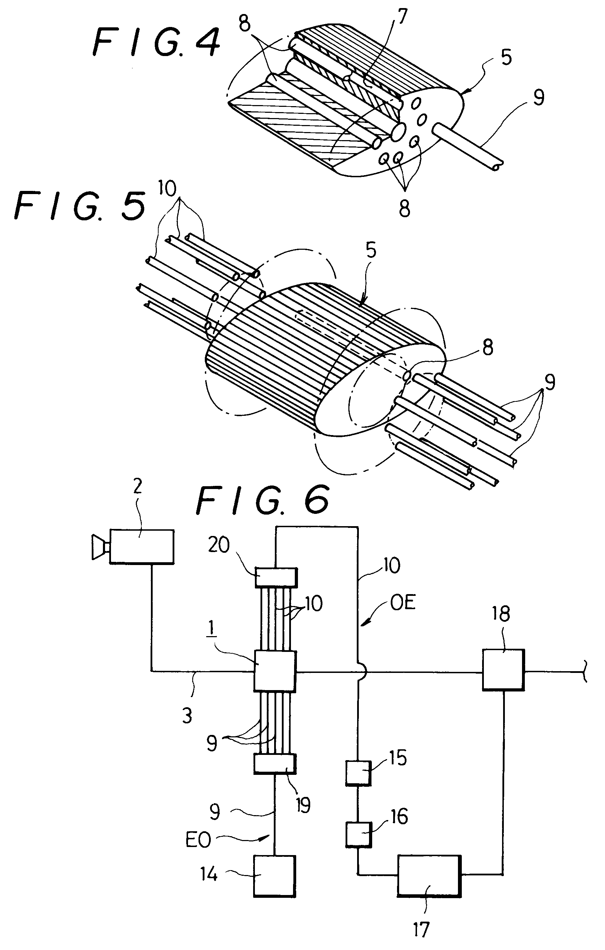

Further, as shown in Fig. 4, both terminals of the transmission optical fiber 9 and the receiving optical fiber 10 may be opposed to each other each at such a position that the movable portion 5 is always present between them with the light permeable member 8 being embedded into the perforation 7 perforated at that position, by which the flow rate for a clear fluid such as a clear paint or water can also be detected quite in the same sensing method as that for the detection of the flow rate for the impermeable fluid such as a pigment paint.

Further, as shown in Fig. 4, when a plurality of light permeable members 8 are arranged along a circle at a predetermined pitch, the resolution power for the rotational speed of the movable portion 5 is increased, to remarkably improve the detection accuracy for the flow rate, so that even a minute change of the flow rate can also be detected surely.

As the number of the permeable members 8 to be embedded in the movable portion 5 is increased, there may be a worry that the number of perforations 7 formed through the movable portion 5 for embedding the light permeable members 8 is also increased and, accordingly, the mechanical strength of the movable portion 5 may be reduced to deteriorate the endurance.

This can be prevented, by a structure shown in Figs. 5 and 6, in which the number of the light permeable members 8 is decreased and, instead, the number of the transmission optical fibers 9 and the receiving optical fibers 10 is increased, so that the light transmission system EO and the light receiving system OE transmit and receive the light at a plurality of positions along the moving direction of the light permeable member 8.

In this structure, plurality pairs of transmission optical fibers 9 and a receiving optical fibers 10 are disposed each at a predetermined interval along the moving direction of the light permeable member 8, respective extended ends of the transmission optical fibers 9, 9, ----are collectively connected by way of an optical brancher 19, to a light emitting portion 14 while respective extended ends of the receiving optical fibers 10, 10, ---- are collectively connected by way of a light collector 20 to the light receiving portion 15.

In the above-mentioned embodiment, descriptions have been made to a case in which the present invention is applied to the oval gear type flowmeter, but the present invention is not restricted only thereto but applicable also to a Root's type flowmeter in which paired rotors each of a specific shape are rotated to each other within a casing, a floating rotor type flowmeter in which a single rotor is rotated, a slide vane type flowmeter or a rotary piston type flowmeter in which a piston reciprocates.

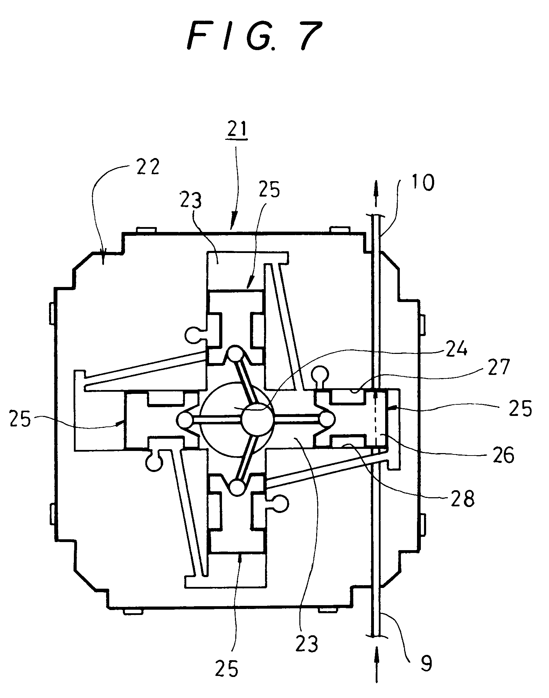

For instance, in a case of applying the present invention to a rotary piston type flowmeter 21 shown in Fig. 7, a piston 25 that reciprocates in a cylinder 23 disposed to a casing 22 at a velocity in accordance with the flow rate of a fluid and rotates the rotational crank shaft 24 is entirely or partially formed with a light permeable member 26.

A terminal for a transmission optical fiber 9 of a light transmission system EO and a terminal for receiving optical fiber 10 of a light receiving system OE that transmit and receive the light through a permeable member 26 are disposed on side walls 27 and 28 of the casing 22 opposed on both sides of the piston 25 as a movable portion such that the terminals are opposed to each other by way of the space in the cylinder 23, each at a position where the light permeable member 26 arrives intermittently by the reciprocal movement of the piston 25.

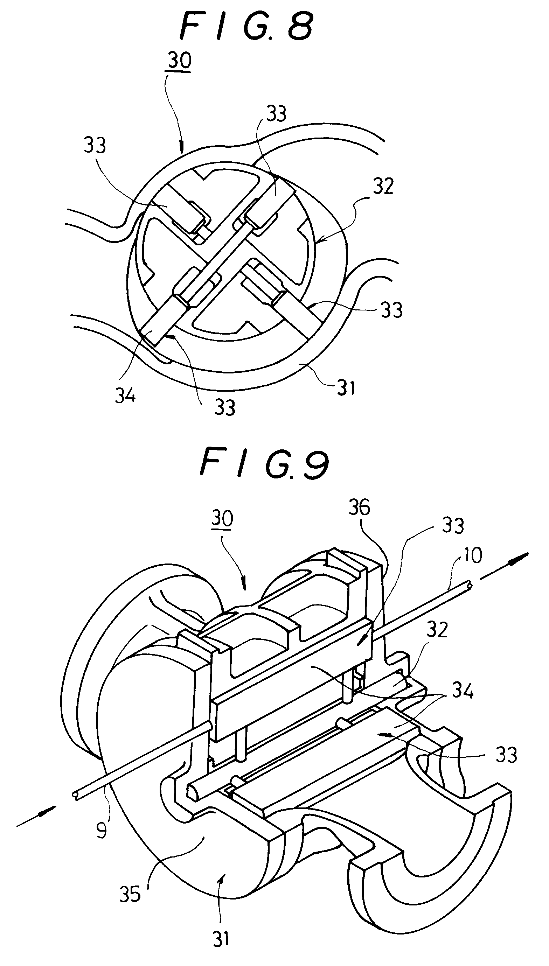

Further, in a case where the present invention is applied to a slide vane type flowmeter 30 shown in Figs. 8 and 9, each or one of vanes 33 giving a rotational force to a rotor 32 under the pressure of a fluid flowing in the casing 31 is formed with a light permeable member 34, and a transmission optical fiber 9 and receiving a optical fiber 10 for transmitting and a receiving light through the permeable member 34 at a position where the permeable member 34 passes intermittently are disposed on right and left side walls 35 and 36 of the casing 31 opposed on both of light and left ends of the light permeable member 34.

In each of the flowmeters described above, the light emitting section 14 of the light transmission system EO and the light receiving section 15 of the light receiving system OE are adapted to transmit and receive the light through the optical fibers 9 and 10. In a case of a flow meter not used in a high voltage zone, however, an electric/optical conversion device constituting the light emitting section 14 and an optical/electric conversion device constituting the light receiving section 15 may be attached to a casing, so that the light is transmitted and received directly between both of them.

As has been described above, in the volumetric flow meter according to the present invention, since the movable portion rotating or reciprocating in a casing in which a fluid is passed through is entirely or partially formed with the light permeable member and the light transmission system and the light receiving system are disposed for transmitting and receiving the light through the light permeable member at a position at which the light permeable member passes or arrives intermittently, the rotational speed or the reciprocating speed of the movable portion in accordance with the flow rate of the fluid can be taken out of the casing while being converted into a light pulse train in proportion with the speed thereof.

Accordingly, it can provide an excellent effect capable of detecting the flow rate of a fluid flowing through the casing in a contactless manner by measuring the period or the frequency of the optical pulse train and, in particular, capable of optically detecting the flow rate even of an impermeable fluid such as a pigment paint.

Further, when the light transmitted and received between the light transmission system and the light receiving system is sent by means of the transmission optical fiber and the receiving optical fiber, there is no worry that the electric system of a flow meter is damaged even if it is disposed in a high voltage zone and, accordingly, it can provide a remarkably excellent effect that the flow rate of a paint supplied to the electrostatic coating machine applied with a high voltage just near the coating machine, as well as it can be used as an explosion-proof flowmeter capable of safely measuring the flow rate of a combustible substance such as gasoline with no risk of flashing detonation.

## Claims

1. A volumetric flowmeter comprising:
   a casing (4, 22, 31) that intervenes in a flow channel of a fluid,

a movable portion (5, 25, 33) that rotates or reciprocates in said casing to continuously deliver the fluid filled in the space of the casing,

said movable portion (5, 25, 33) being entirely or partially provided with a light permeable member (8, 26, 34) for allowing a light to permeate from one to the other wall sides of said casing opposed on both sides of said movable portion, and

a light transmission system (EO) and a light receiving system (OE) for transmitting and receiving the light through said light permeable member at a position at which said permeable member (8, 26, 34) passes or arrives intermittently.

2. A volumetric flowmeter as defined in claim 1, wherein the light transmission system (EO) and the light receiving system (OE) transmit and receive the light between the terminal of a transmission optical fiber (9) and the terminal of a receiving optical fiber (10) each having a condenser lens disposed at the top end thereof.

3. A volumetric flowmeter as defined in claim 1, wherein the light permeable member (8, 26, 34) comprises an optical fiber or a glass rod embedded in a perforation 7 passing through the movable portion (5, 25, 33).

4. A volumetric flowmeter as defined in claim 1, wherein the light transmission system (EO) and the light receiving system (OE) transmit and receive the light at a plurality of positions along the moving direction of said light permeable member (8, 26, 34).

# F I G. 1

# F I G. 2

# F I G. 3

FIG. 4

FIG. 5

FIG. 6

# F I G. 7

# F I G. 8

# F I G. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 560 988 (R. TRAVERT) <br> * page 2, line 9 - line 25 * <br> * page 4, line 1 - line 29; figures 1-4 * <br> --- | 1 | G01F1/06 <br> G01F1/10 <br> G01F3/06 <br> G01F3/10 <br> G01F3/16 <br> G01F3/18 <br> G01F15/06 |
| X <br><br> A | WO-A-9 006 493 (A. NOREN) <br> * page 3, line 7 - line 26; figures 1,2 * <br><br> --- | 1 <br><br> 2 | |
| A | GB-A-2 083 210 (L.I.A. TAYLOR) <br> * page 4, line 16 - line 23; figure 13 * <br> --- | 2 | |
| X | EP-A-0 257 590 (GILBARCO) <br> * column 6, line 5 - column 7, line 14; figure 2 * <br> --- | 1 | |
| X | FR-A-2 413 639 (H. GERNELLE, E.A.) <br> * page 6, line 3 - line 18; figures 1,2 * <br> --- | 1 | |
| X | PATENT ABSTRACTS OF JAPAN <br> vol. 8, no. 117 (P-277)(1554) 31 May 1984 <br> & JP-A-59 024 212 ( NISSAN JIDOSHA K.K. ) 7 February 1984 <br> * abstract * <br><br> ----- | 1 | TECHNICAL FIELDS SEARCHED (Int. Cl.5) <br><br> G01F |

The present search report has been drawn up for all claims

| Place of search | Date of completion of the search | Examiner |
|---|---|---|
| THE HAGUE | 14 APRIL 1992 | HEINSIUS R. |